Europäisches Patentamt

European Patent Office

Office européen des brevets

(19)

(11) Publication number: **0 185 541 B1**

## EUROPEAN PATENT SPECIFICATION

(12)

(45) Date of publication of patent specification: **17.06.92**   (51) Int. Cl.⁵: **B65G  33/14**, **A21C 1/14**

(21) Application number: **85309178.3**

(22) Date of filing: **17.12.85**

(54) **A screw conveyor.**

(30) Priority: **17.12.84 JP 191161/84**

(43) Date of publication of application:
**25.06.86 Bulletin  86/26**

(45) Publication of the grant of the patent:
**17.06.92 Bulletin  92/25**

(84) Designated Contracting States:
**AT BE CH DE FR GB IT LI NL SE**

(56) References cited:
**EP-A- 0 069 929      DD-C- 24 523
DE-C- 722 761        GB-A- 1 282 959
US-A- 1 481 304      US-A- 4 167 237**

(73) Proprietor: **RHEON AUTOMATIC MACHINERY
CO. LTD.
2-3, Nozawa-machi
Utsunomiya-shi Tochigi-ken(JP)**

(72) Inventor: **Torahiko, Hayashi
3-4, Nozawa-machi
Utsunomiya-shi Tochigi-ken(JP)**

(74) Representative: **Leale, Robin George et al
FRANK B. DEHN & CO. Imperial House 15-19
Kingsway
London WC2B 6UZ(GB)**

EP 0 185 541 B1

## Description

The present invention relates to a screw conveyor including a propelling device arranged to push a plastic material, such as butter, jam, confectionery or bread dough, into the screw of the screw conveyor.

In conventional screw conveyors for plastic materials the so-called bridge phenomenon, namely the phenomenon whereby a mass of sticky material sticks to opposite walls, straddling the screws and refusing to flow into them, frequently occurs. Further, such plastic material is liable to adhere to walls of an associated hopper, thus obstructing the downward flow of the plastic material and necessitating manual removal of the obstacle.

U.S. Patent No. 4167237 discloses a screw conveyer according to the first part of claim 1, comprising a pressure feeder including pusher assemblies, where a hollow cylindrical pusher member, oval in cross-section, is turned by a pinion gear to push a plastic material into the screws of a screw feeder. Although this pusher member usually works satisfactorily it requires a fairly complex operating mechanism, including a rack-and-pinion in the hollow cylindrical pusher member, which results in high production costs. Further, the cylindrical pusher member requires a relatively large space, which is disadvantageous in that it necessitates overcoming a relatively large inertial resistance, and furthermore the screw utilizing this cylindrical pusher member is inevitably unduly large.

According to the present invention there is provided a screw conveyor comprising a housing, a hopper mounted on the housing, at least one screw horizontally disposed in the housing, the housing being provided with an outlet at the delivery end of the screw, and a propelling device disposed in the housing and operable to push material into the screw, characterised in that the propelling device comprises at least one driven roller extending horizontally above the screw and adjacent a wall of the housing, guide means provided on a wall of the housing, at least one vane received slidably in at least one slot extending longitudinally of the said roller, the vane extending across the circular cross-section of the roller and being longer in that direction than the diameter of the roller, and the said guide means being arranged, during rotation of the said roller, to act on the said vane to cause one edge of the vane to protrude progressively further, up to a maximum, from the surface of the roller as that edge of the vane passes through a material being fed to the conveyor.

Thus, in a preferred form of the present invention a propelling device for a plastic material is arranged above the screw of the screw conveyor and adjacent a wall of a housing thereof, and comprises a driven roller having at least one vane within at least one slot extending along the axis of the roller, and a guide member. The vane is preferably rectangular and is wider than the diameter of the driven roller and slidably movable within the slot, which is preferably a rectangular slot, so that when one edge of the vane is pushed inwardly its opposite edge protrudes from the roller. The driven roller is rotated about its axis by a conventional drive means. The guide member is located on the wall of the housing and has an arcuate face fitting a portion of the periphery of the driven roller and at least one arm extending generally horizontally from the lowest point of the guide member.

The roller is arranged so that a portion of its circumferential surface slides on the arcuate face of the guide member, whereby, when the roller is rotated, one edge of the vane received in the slot is pushed by the arm or the arcuate face of the guide member to cause its other edge to protrude from the slot. When the roller is rotated in the appropriate direction, the protruding portion of the vane pushes the plastic material into the screw, and thus, even when a plastic material of low fluidity is being fed in the hopper, the occurrence of the bridge phenomenon, or the adherence of the plastic material to walls of the hopper, can be avoided, so as to effectively feed the material. A single vane disposed within a slot can push the plastic material in this way, but a plurality of circumferentially spaced vanes may be provided in a plurality of slots to achieve more effective and complete pushing.

Since such a propelling device has a relatively simple operating mechanism comprising only a driven roller with at least one vane and a guide member, it has notable advantages such as less inertial resistance and therefore easier control of the rotational speed of the roller, and less space being required for installation.

Some embodiments of the invention will now be described by way of example and with reference to the accompanying drawings, in which:
Fig. 1 is a schematic longitudinal sectional view of a first embodiment of the present invention;
Fig. 2 is a schematic transverse cross-sectional view of the embodiment of Fig. 1;
Fig. 3(A) is a cross-sectional view of a driven roller of a second embodiment of the invention, with three rectangular vanes, each formed into one vane from two separate pieces and slidably received in a rectangular slot in the driven roller;
Fig. 3(B) is a perspective view of the rectangular vanes of the embodiment of Fig. 3(A);
Fig. 4 is a schematic transverse cross-sectional view of a third embodiment of the invention, showing two propelling devices; and
Fig. 5 is a schematic perspective view showing the relationship between a housing, a guide member, and a driven roller having a rectangular vane slidable in a rectangular slot formed therein.

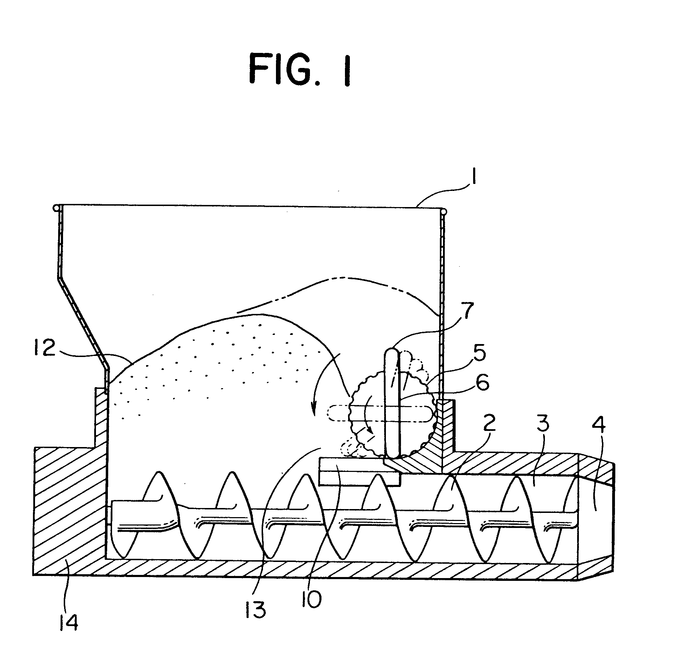

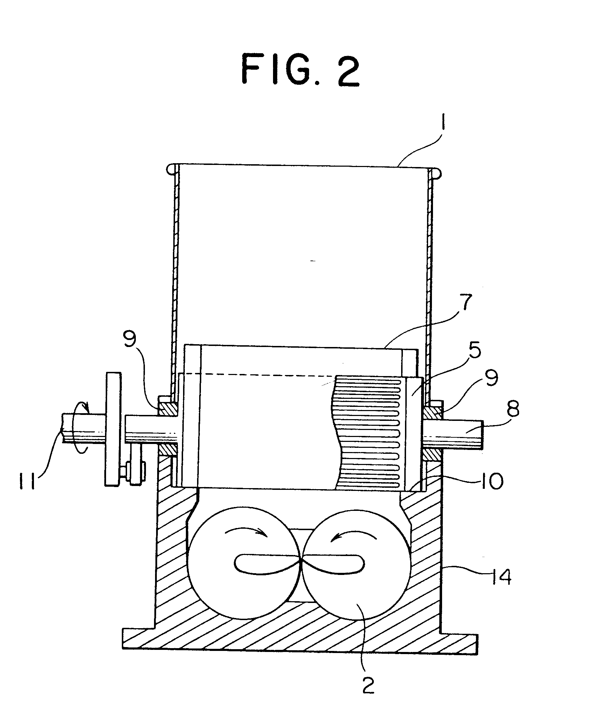

Referring to the drawings, Figures 1 and 2 show a screw conveyor including a housing 14, a pair of screws 2, an outlet 4, and a hopper 1. A propelling device is provided above the screws and adjacent a wall of the housing 14, and comprises a driven roller 5 having a rectangular vane 7 mounted therein, and a guide member 10. The hopper 1 is mounted on the housing 14.

The rectangular vane 7 has a greater width than the diameter of the roller 5, and it is received slidably in a rectangular slot 6 in the roller.

In Fig. 2, the driven roller 5 is partly broken away to show the rectangular vane 7 received within the rectangular slot 6, and a dotted line shows the periphery of the driven roller. A plurality of longitudinal grooves on the roller 5 helps the roller to frictionally engage the plastic material.

The driven roller 5 is disposed perpendicularly to the axes of the screws 2, and its shaft 8 is rotatably supported by bearings 9 mounted on the upper portion of the housing 14. The roller is rotated by a drive shaft 11, which is in turn driven by a motor (not shown).

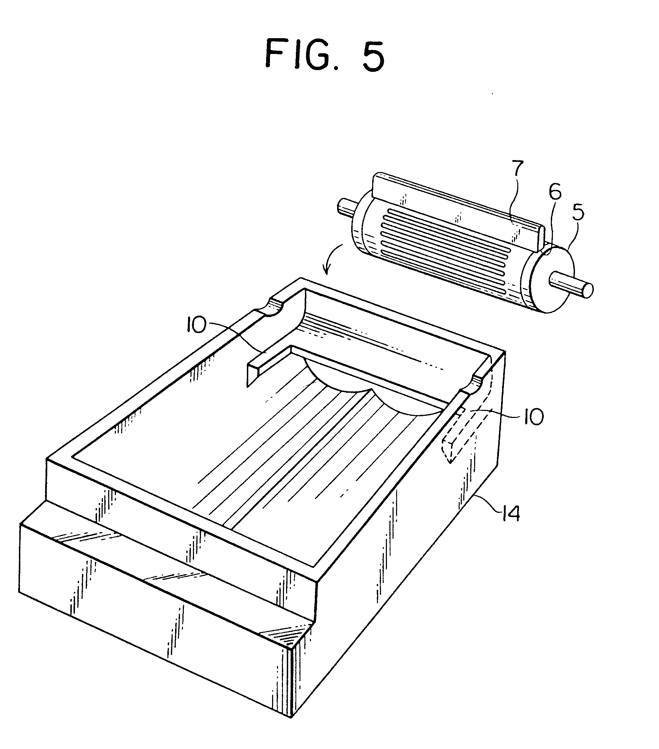

Fig. 5 illustrates the relationship between the driven roller 5, the rectangular vane 7, the guide member 10, and the housing 14. The guide member 10 has an arcuate face which fits a portion of the periphery of the driven roller 5, and two arms which extend generally horizontally from the lowest point of the guide member 10. The rectangular slot 6 extends along the length of the driven roller 5 and diametrically across the circular cross-section thereof. The slot is preferably located so that it intersects the axis of the roller.

The guide member 10 is mounted on the wall of the housing 14, or it may be formed as a portion of the wall of the housing.

When the driven roller 5 is rotated and the plastic material 12 is being delivered from the hopper 1, the rectangular vane 7, moving in a direction as shown by the arrow in Fig. 1, has one of its edges pushed inwardly of the roller 5, first by the arms of the guide member 10, then by the arcuate portion thereof, so that the other edge of the vane protrudes from the periphery of the driven roller 5 and pushes the plastic material into an inlet portion 13 of the housing 14, thereby pushing the material onto the screws 2.

Thus one edge (effectively the lower edge) of the rectangular vane is progressively pushed into the roller 5 and the opposite edge (effectively the upper one) protrudes from the periphery of the roller, whereby the plastic material 12 in the hopper 1 is continuously fed onto the screws without the occurrence of the bridge phenomenon, i.e. the adherence of the material to the walls of the housing 14.

Although this first embodiment of the invention has a rectangular vane and slot, they may take other forms, provided that the vane can move slidably in the slot and one end of the vane can protrude from the periphery of the roller.

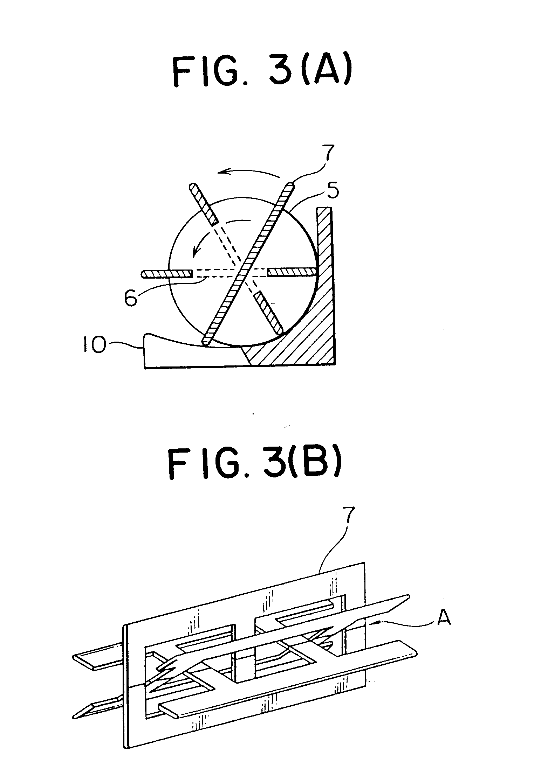

Figs. 3(A) and 3(B) illustrate an embodiment with three rectangular vanes 7, each of which is made from two stamped plates having the shapes shown in Fig. 3(B). Each plate is connected to its mating plate at A. If the vane takes the shape shown in Fig. 3(B), each vane can be slidably received in a corresponding slot. Other shapes can readily be conceived to attain the same purpose. The slightly arcuate faces of the arms of the guide member 10 are effective to smoothly and gradually push the edges of the rectangular vanes 7 so as to move them into their slots.

This second embodiment of the invention pushes the plastic material more smoothly than the first embodiment, and this is brought about by the provision of a plurality of vanes.

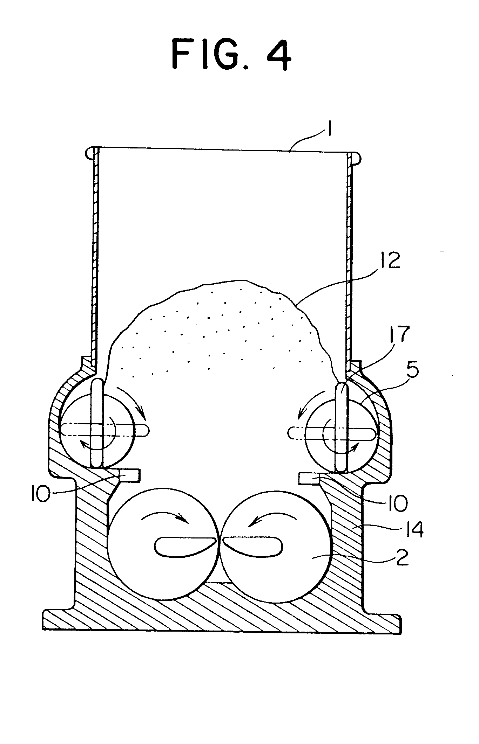

A third embodiment of the invention, shown in Fig. 4, has two propelling devices. Thus two driven rollers 5 have respective vanes 17 slidable in their slots. The rollers are again disposed at the top of the housing 14, but this time with their axes parallel to the axes of the screws 2. As this third embodiment has two propelling devices, one adjacent each of the screws 2, the plastic material can be effectively pushed without it adhering to the wall of the housing 14 or the hopper 1.

In the above described embodiments the slot 6 extends substantially the whole length of the driven roller 5, but alternatively two or more shorter slots could be provided at optional locations in place of the slot 6, with a corresponding number of vanes received in the slots.

Thus, by providing a vane which alternately protrudes from and retracts into a driven roller, plastic material in the hopper of the screw conveyor is effectively propelled onto the screw of the conveyor, thereby enabling the continuous feeding of plastic material, such as butter, jam, or cream, from the outlet of the screw conveyor to a subsequent processing stage.

## Claims

1. A screw conveyor comprising a housing (14), a hopper (1) mounted on the housing, at least one screw (2) horizontally disposed in the housing, the housing being provided with an outlet (4) at the delivery end of the screw, and a propelling device disposed in the housing and operable to push material into the screw, characterised in that the propelling device comprises at least one driven roller (5) extending horizontally above the screw and adjacent a wall of the housing, guide means (10) provided on a wall of the housing, at least one vane (7) received slidably in at least one slot (6) extending longitudinally of the said roller, the vane extending across the circular cross-section of the roller and being longer in that direction than the diameter of the roller, and the said guide means being arranged, during rotation of the said roller, to act on the said vane to cause one edge of the vane to protrude progressively further, up to a maximum, from the surface of the roller as that edge of the vane passes through a material being fed to the conveyor.

2. A screw conveyor as claimed in claim 1, wherein the axis of the said driven roller (5) is parallel to the axis of the screw (2).

3. A screw conveyor as claimed in claim 1, wherein the axis of the said driven roller (5) is perpendicular to the axis of the screw (2).

4. A screw conveyor as claimed in any of claims 1 to 3, wherein the vane and the slot are rectangular.

## Revendications

1. Transporteur à vis comportant un corps (14), une trémie (1) montée sur le corps, au moins une vis (2) disposée horizontalement dans le corps, le corps étant pourvu d'une sortie (4) à l'extrémité de distribution de la vis, et un dispositif de propulsion disposé dans le corps et pouvant être mis en oeuvre pour pousser inne matière dans la vis, caractérisé en ce que le dispositif de propulsion comporte au moins un rouleau mené (5) s'étendant horizontalement au-dessus de la vis et adjacent à une paroi du corps, un moyen (10) de guidage prévu sur une paroi du corps, au moins une palette (7) reçue de façon coulissante dans au moins une fente (6) s'étendant longitudinalement audit rouleau, la palette s'étendant à travers la section transversale circulaire du rouleau et étant d'une longueur, dans cette direction, supérieure au diamètre du rouleau, et ledit moyen de guidage étant disposé, pendant la rotation dudit rouleau, de façon à agir sur ladite palette pour amener un bord de la palette à faire saillie progressivement davantage, jusqu'à un maximum, de la surface du rouleau pendant que ce bord de la palette passe à travers une matière en cours de distribution vers le transporteur.

2. Transporteur à vis selon la revendication 1, dans lequel l'axe dudit rouleau mené (5) est parallèle à l'axe de la vis (2).

3. Transporteur à vis selon la revendication 1, dans lequel l'axe dudit rouleau mené (5) est perpendiculaire à l'axe de la vis (2).

4. Transporteur à vis selon l'une quelconque des revendications 1 à 3, dans lequel la palette et la fente sont rectangulaires.

## Patentansprüche

1. Schneckenförderer, umfassend ein Gehäuse (14), einen Trichter (1), der an dem Gehäuse angebracht ist, wenigstens eine Schnecke (2), die in dem Gehäuse horizontal angeordnet ist, wobei das Gehäuse am Abgabeende der Schnecke mit einem Auslaß (4) versehen ist, und eine Vorbewegungseinrichtung, die in dem Gehäuse vorgesehen und betätigbar ist, um Material in die Schnecke zu schieben, dadurch **gekennzeichnet,** daß die Vorbewegungseinrichtung wenigstens eine angetriebene Rolle (5), die sich oberhalb der Schnecke und nahe einer Wand des Gehäuses horizontal erstreckt, eine Führungseinrichtung (10), die an einer Wand des Gehäuses vorgesehen ist, und wenigstens einen Flügel (7) umfaßt, der in wenigstens einem Schlitz (6) verschiebbar aufgenommen ist, der sich in Längsrichtung der Rolle erstreckt, wobei der Flügel sich über den kreisförmigen Querschnitt der Rolle erstreckt und in dieser Richtung länger ist als der Durchmesser der Rolle, und wobei die Führungseinrichtung angeordnet ist, um während der Drehung der Rolle auf den Flügel zu wirken, um zu veranlassen, daß eine Kante des Flügels von der Oberfläche der Rolle zunehmend weiter bis zu einem Maximum vorragt, wenn diese Kante des Flügels durch ein dem Förderer zugeführtes Material hindurchtritt.

2. Schneckenförderer nach Anspruch 1, wobei die Achse der angetriebenen Rolle (5) zu der Achse der Schnecke (2) parallel verläuft.

3. Schneckenförderer nach Anspruch 1, wobei die Achse der angetriebenen Rolle (5) zu der Achse der Schnecke (2) rechtwinklig verläuft.

4. Schneckenförderer nach irgendeinem der Ansprüche 1 bis 3, wobei der Flügel und der Schlitz rechteckig sind.

# FIG. 1

# FIG. 2

# FIG. 3(A)

# FIG. 3(B)

# FIG. 4

# FIG. 5